# EUROPEAN PATENT SPECIFICATION

(11) **EP 4 052 170 B1**
(45) Date of publication and mention of the grant of the patent: **25.11.2026**
(21) Application number: 20804727.4
(22) Date of filing: 19.10.2020
(51) Int. Cl.: G06F 18/25, G06V 10/82, G06V 20/40

(54) **MOMENT LOCALIZATION IN MEDIA STREAM**
MOMENTLOKALISIERUNG IN EINEM MEDIENSTROM
LOCALISATION DE MOMENT DANS UN FLUX MULTIMÉDIA

(30) Priority: 01.11.2019 CN 201911059082
(43) Date of publication of application: 07.09.2022
(73) Proprietor: Microsoft Technology Licensing, LLC, Redmond, WA 98052-6399 (US)
(72) Inventor: PENG, Houwen, Redmond, WA 98052-6399 (US); FU, Jianlong, Redmond, WA 98052-6399 (US)
(74) Representative: CMS Cameron McKenna Nabarro Olswang LLP
(86) International application number: PCT/US2020/056390
(87) International publication number: WO 2021/086676

(56) References cited:
- HENDRICKS LISA ANNE ET AL: "Localizing Moments in Video with Natural Language", 2017 IEEE INTERNATIONAL CONFERENCE ON COMPUTER VISION (ICCV), IEEE, 22 October 2017 (2017-10-22), pages 5804 - 5813, XP033283461, DOI: 10.1109/ICCV.2017.618
- GAO JIYANG ET AL: "TALL: Temporal Activity Localization via Language Query", 2017 IEEE INTERNATIONAL CONFERENCE ON COMPUTER VISION (ICCV), IEEE, 22 October 2017 (2017-10-22), pages 5277 - 5285, XP033283406, DOI: 10.1109/ICCV.2017.563
- SONGYANG ZHANG ET AL: "Learning 2D Temporal Adjacent Networks for Moment Localization with Natural Language", ARXIV.ORG, CORNELL UNIVERSITY LIBRARY, 201 OLIN LIBRARY CORNELL UNIVERSITY ITHACA, NY 14853, 8 December 2019 (2019-12-08), XP081547520

## Description

### BACKGROUND

Currently, video understanding is an important research area in the field of computer vision. For example, moment localization with natural language is a research topic of interest in video understanding. For example, a location of a moment in a video matching an action can be determined by specified a natural language query of the action. HENDRICKS LISA ANNE ET AL: "Localizing Moments in Video with Natural Language", 2017 IEEE INTERNATIONAL CONFERENCE ON COMPUTER VISION (ICCV), IEEE, 22 October 2017, describes the Moment Context Network (MCN) which effectively localizes natural language queries in videos by integrating local and global video features over time. A key obstacle to training our MCN model is that current video datasets do not include pairs of localized video segments and referring expressions, or text descriptions which uniquely identify a corresponding moment. The Distinct Describable Moments (DiDeMo) dataset, which consists of over 10,000 unedited, personal videos in diverse visual settings with pairs of localized video segments and referring expressions, are collected.
GAO JIYANG ET AL: "TALL: Temporal Activity Localization via Language Query", 2017 IEEE INTERNATIONAL CONFERENCE ON COMPUTER VISION (ICCV), IEEE, 22 October 2017 describes temporal localization of actions in untrimmed videos, and localizing activities by natural language queries. The method uses a novel Cross-modal Temporal Regression Localizer (CTRL) to jointly model text query and video clips, output alignment scores and action boundary regression results for candidate clips.
SONGYANG ZHANG ET AL: "Learning 2D Temporal Adjacent Networks for Moment Localization with Natural Language", CORNELL UNIVERSITY LIBRARY, 201 OLIN LIBRARY, 8 December 2019 addresses the problem of retrieving a specific moment from an untrimmed video by a query sentence. The temporal relations between video moments by a two-dimensional map, where one dimension indicates the starting time of a moment and the other indicates the end time, are modelled. This 2D temporal map can cover diverse video moments with different lengths, while representing their adjacent relations. Based on the 2D map, a Temporal Adjacent Network (2D-TAN), a single-shot framework for moment localization, is proposed. It is capable of encoding the adjacent temporal relation, while learning discriminative features for matching video moments with referring expressions.

### SUMMARY

The invention is set out in the appended set of claims.

In accordance with some implementations, there is provided a solution for processing a media stream based on a neural network. A two-dimensional temporal feature map representing a plurality of moments within a media stream is extracted from the media stream. The two-dimensional temporal feature map comprises a first dimension representing a start of a respective one of the plurality of moments and a second dimension representing an end of a respective one of the plurality of moments. Subsequently, a correlation between the plurality of moments and an action in the media stream is determined based on the two-dimensional temporal feature map.

This Summary is provided to introduce selection of concepts in a simplified form that are further described below in the Detailed Description. This Summary is not intended to identify key features or essential features of the claimed subject matter, nor is it intended to be used to limit the scope of the claimed subject matter

### BRIEF DESCRIPTION OF THE DRAWINGS

Fig. 1 illustrates a block diagram of a computing device where implementations of the subject matter can be implemented;
Fig. 2 illustrates a schematic diagram of architecture of a two-dimensional temporal adjacent network in accordance with some implementations of the subject matter;
Figs. 3A and 3B illustrate a schematic diagram of two-dimensional temporal feature map in accordance with some implementations of the subject matter;
Fig. 4 illustrates a schematic diagram of a feature map extractor in accordance with some implementations of the subject matter;
Fig. 5 illustrates a schematic diagram of a sparse sampling method in accordance with some implementations of the subject matter;
Fig. 6 illustrates a schematic diagram of a language encoder in accordance with some implementations of the subject matter;
Fig. 7 illustrates a schematic diagram of a temporal adjacent network in accordance with some implementations of the subject matter;
Fig. 8 illustrates a schematic diagram of scores in accordance with some implementations of the subject matter; and
Fig. 9 illustrates a flowchart of a method in accordance with some implementations of the subject matter.

Throughout the drawings, the same or similar reference signs refer to the same or similar elements

### DETAILED DESCRIPTION

The subject matter is now discussed with reference to several example implementations. It is to be understood these implementations are discussed only for the purpose of enabling those skilled persons in the art to better understand and thus implement the subject matter, rather than suggesting any limitations on the scope of the subject matter.

As used herein, the term "includes" and its variants are to be read as open terms that mean "includes, but is not limited to." The term "based on" is to be read as "based at least in part on." The term "one implementation" and "an implementation" are to be read as "at least one implementation." The term "another implementation" is to be read as "at least one other implementation." The terms "first," "second," and the like may refer to different or same objects. Other definitions, explicit and implicit, may be included below.

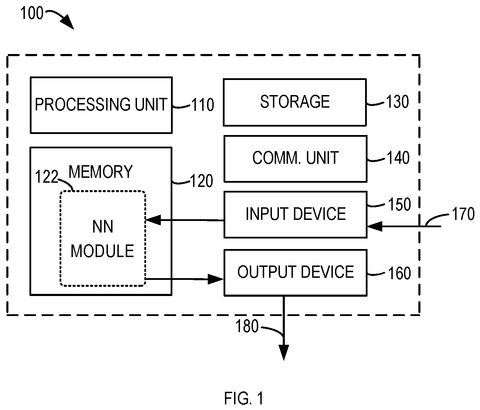

Basic principles and several examples of the subject matter are explained below with reference to the drawings. Fig. 1 illustrates a block diagram of a computing device 100 that can carry out implementations of the subject matter. It should be understood that the computing device 100 shown in Fig. 1 is only exemplary and shall not constitute any restrictions over functions and scopes of the implementations described by the subject matter. According to Fig. 1, the computing device 100 may be in the form of a general purpose computing device. Components of the computing device 100 can include, but not limited to, one or more processors or processing units 110, memory 120, storage device 130, one or more communication units 140, one or more input devices 150 and one or more output devices 160.

In some implementations, the computing device 100 can be implemented as various user terminals or service terminals with computing power. The service terminals can be servers, large-scale computing devices and the like provided by a variety of service providers. The user terminal, for example, is mobile terminal, fixed terminal or portable terminal of any types, including mobile phone, site, unit, device, multimedia computer, multimedia tablet, Internet nodes, communicator, desktop computer, laptop computer, notebook computer, netbook computer, tablet computer, Personal Communication System (PCS) device, personal navigation device, Personal Digital Assistant (PDA), audio/video player, digital camera/video, positioning device, television receiver, radio broadcast receiver, electronic book device, gaming device or any other combinations thereof consisting of accessories and peripherals of these devices or any other combinations thereof. It can also be predicted that the computing device 100 can support any types of user-specific interfaces (such as "wearable" circuit and the like).

The processing unit 110 can be a physical or virtual processor and can execute various processing based on the programs stored in the memory 120. In a multi-processor system, a plurality of processing units executes computer-executable instructions in parallel to enhance parallel processing capability of the computing device 100. The processing unit 110 also can be known as central processing unit (CPU), microprocessor, controller and microcontroller. In addition, the processing unit 110 may also be implemented as Graphical Processing Unit (GPU) for executing parallel computation like compute-intensive processing and the like.

The computing device 100 usually includes a plurality of computer storage media. Such media can be any attainable media accessible by the computing device 100, including but not limited to volatile and non-volatile media, removable and non-removable media. The memory 120 can be a volatile memory (e.g., register, cache, Random Access Memory (RAM)), a non-volatile memory (such as, Read-Only Memory (ROM), Electrically Erasable Programmable Read-Only Memory (EEPROM), flash), or any combinations thereof. The memory 120 can include a neural network (NN) module 122 configured to execute functions of various implementations described herein. The neural network module 122 can be accessed and operated by the processing unit 110 to perform corresponding functions.

The storage device 130 can be removable or non-removable medium, and can include machine readable medium, which can be used for storing information and/or data and can be accessed within the computing device 100. The computing device 100 can further include a further removable/non-removable, volatile/non-volatile storage medium. Although not shown in Fig. 1, there can be provided a disk drive for reading from or writing into a removable and non-volatile disk and an optical disk drive for reading from or writing into a removable and non-volatile optical disk. In such cases, each drive can be connected via one or more data medium interfaces to the bus (not shown).

The communication unit 140 implements communication with another computing device through communication media. Additionally, functions of components of the computing device 100 can be realized by a single computing cluster or a plurality of computing machines, and these computing machines can communicate through communication connections. Therefore, the computing device 100 can be operated in a networked environment using a logic connection to one or more other servers, a Personal Computer (PC) or a further general network node.

The input device 150 can be one or more various input devices, such as mouse, keyboard, trackball, voice-input device and the like. The output device 160 can be one or more output devices, e.g., display, loudspeaker and printer etc. The computing device 100 also can communicate through the communication unit 140 with one or more external devices (not shown) as required, wherein the external device, e.g., storage device, display device etc., communicates with one or more devices that enable the users to interact with the computing device 100, or with any devices (such as network card, modem and the like) that enable the computing device 100 to communicate with one or more other computing devices. Such communication can be executed via Input/Output (I/O) interface (not shown).

In some implementations, apart from being integrated on an individual device, some or all of the respective components of the computing device 100 also can be set in the form of cloud computing architecture. In the cloud computing architecture, these components can be remotely arranged and can cooperate to implement the functions described by the subject matter. In some implementations, the cloud computing provides computation, software, data access and storage services without informing a terminal user of physical positions or configurations of systems or hardware providing such services. In various implementations, the cloud computing provides services via Wide Area Network (such as Internet) using a suitable protocol. For example, the cloud computing provider provides, via the Wide Area Network, the applications, which can be accessed through a web browser or any other computing components. Software or components of the cloud computing architecture and corresponding data can be stored on a server at a remote position. The computing resources in the cloud computing environment can be merged or spread at a remote datacenter. The cloud computing infrastructure can provide, via a shared datacenter, the services even though they are shown as a single access point for the user. Therefore, components and functions described herein can be provided using the cloud computing architecture from a service provider at a remote position. Alternatively, components and functions also can be provided from a conventional server, or they can be mounted on a client device directly or in other ways.

The computing device 100 may be used for implementing a solution of an artificial neural network in accordance with implementations of the subject matter. The computing device 100 may receive via the input device 150 input data, for example media streams like video and audio. Besides, the computing device 100 may also receive via the input device 150 a query for a specific action in the video, wherein the query may be in the form of text or audio. The Neural Network (NN) module 122 may process the input data to determine corresponding output data, such as a location of an action specified by the query in the video. The output data may be provided to the output device 160 as output 180 for users.

As described above, moment localization is an important branch application of video understanding with the purpose of determining a moment of an action matching the query in the video, for example, starting time and end time. The term "action" does not necessarily indicate a strong body movement and may also represent a continuous state, for example, a stationary state. For example, in a video of teaching saxophone, the teacher may play the saxophone over a certain time period, talk about playing the saxophone over another time period and play the saxophone again later. If users intend to query when the teacher is playing the saxophone, they may provide a corresponding natural language query, for example "someone is playing the saxophone." If users want to query when the teacher is talking about playing the saxophone, they may provide a corresponding natural language query like "someone is talking about playing the saxophone." If users want to query when the teacher is playing the saxophone again, they may provide a corresponding natural language query like "someone is playing the saxophone again."

Although application scenarios in accordance with implementations of the subject matter are introduced above with reference to moment localization of the video, it should be understood that implementations of the subject matter may be applied into any other suitable scenarios. For example, in addition to video understanding, implementations of the subject matter may also be applied into other media streams like audio or video. As another example, implementations of the subject matter may further be applied into other areas of the video understanding, e.g., temporal action proposal or temporal action detection etc. For example, the temporal action proposal refers to determining from the video the moments that possibly contain the action. Therefore, in such application, it is unnecessary to use query as input. The temporal action detection may classify the proposals based on the temporal action proposal without using the query as input.

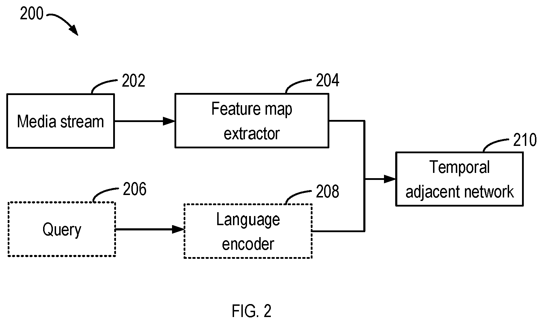

Fig. 2 illustrates a schematic diagram of a neural network 200 carrying out moment localization with natural language in accordance with some implementations of the subject matter. The moment, also known as a period, represents a segment of the media stream, for example a segment of a video.

As shown in Fig. 2, the neural network 200 receives the media stream 202 as input, where the media stream 202 may be an untrimmed media stream like video and/or audio. The media stream 202 usually refers to a segment of media with a certain length, the length being defined by the starting time and end time. The media stream may be divided into frames as basic unit in time dimension and the media stream therefore may also be known as a frame sequence. To facilitate the description, video V serves as an example below to describe the neural network 200. For example, the video V may be untrimmed and include more than one action.

In moment localization with natural language, the neural network 200 is configured to extract video clips matching the query 206, i.e., a moment M. In particular, the query sentence may be denoted as $S = {\left\{{s}_{i}\right\}}_{i = 0}^{{l}^{S} - 1}$, where *sᵢ* denotes a word or character in a sentence and *l^{S}* denotes the total word count. The video V may be represented as a frame sequence, i.e., $V = {\left\{{x}_{i}\right\}}_{i = 0}^{{l}^{V} - 1}$*,* where *xᵢ* denotes one frame in the video V and *l^{V}* denotes the total number of frames. The neural network 200 is configured to enable the extracted moment starting from the frame *xᵢ* to the frame *xⱼ* to have the same meaning as the input sentence S.

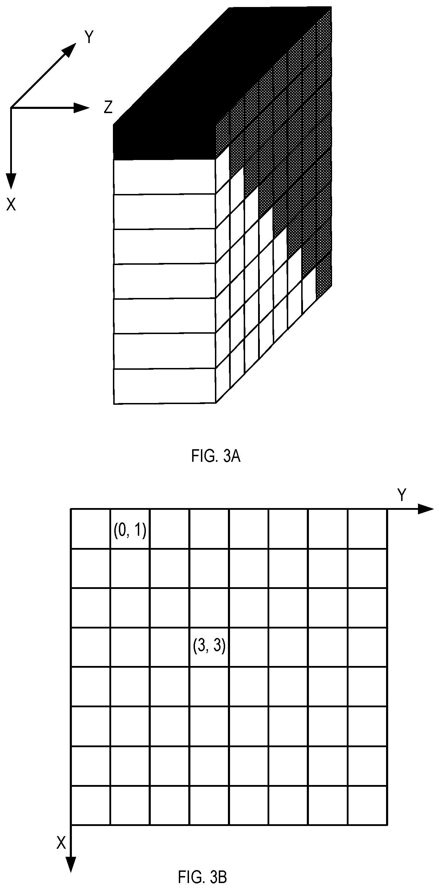

As shown in Fig. 2, the feature map extractor 204 extracts a 2D temporal feature map from the media stream 202. Figs. 3A and 3B illustrate examples of the 2D temporal feature map in accordance with some implementations of the subject matter. The 2D temporal feature map includes three dimensions, including two time dimensions X, Y, and a feature dimension Z. For example, X dimension represents starting time of moments and Y dimension represents end time of moments. Fig. 3B illustrates two time dimensions of the 2D temporal feature map of Fig. 3A.

For example, the video V may be segmented into N video clips of the same length, where the length of each video clip is □. For example, coordinates (0, 1) represent a moment starting from 0 and ending at 2□□and including the first and second clips; coordinates (3, 3) indicate a moment starting from 3□ and ending at 4□, i.e., the fourth clip. A portion of Fig. 3B where X coordinate value is greater than Y coordinate value is invalid and a portion of Fig. 3B where X coordinate value equals to Y coordinate value indicates a moment of one video clip length. A portion of Fig. 3B where X coordinate value is smaller than Y coordinate value represents the moments each having a length greater than one video clip length.

Alternatively, the length of the moment may be used as the Y dimension. In this case, the coordinates in Figs. 3A and 3B can be easily converted to the alternative embodiment, which will not be elaborated here.

In addition, the neural network 200 may also receive the query 206 for the media stream 202. For example, the query 206 may be a sentence or a voice speech. For the sake of convenience, the sentence S serves as an example of the query 206 below for description.

As shown in Fig. 2, the language encoder 208 may encode the query 206 to generate a vector representation of the query 206. The query 206 may be encoded using any suitable method currently known or to be developed in the future. The vector representation of the query 206 is provided to a temporal adjacent network 210 together with the 2D temporal feature map. In an embodiment not covered by the invention, the temporal adjacent network 210 may fuse the vector representation of the query 206 with the 2D temporal feature map to determine scores of correlation between the respective moments and the action specified by the query 206. For example, when determining the scores of respective moments, the temporal adjacent network 210 may perceive the context to more conveniently extract the discriminative features of the moments.

As described above, implementations of the subject matter may also be applied into any other suitable scenarios like temporal action proposal or temporal action detection etc. In these scenarios, it is only required to provide the 2D temporal feature map to the temporal adjacent network for the discriminative purpose without the query 206 and the language encoder 208.

With the 2D temporal feature map, more than one moment can be evaluated simultaneously, which allows the video context information between different moments to be considered. Compared with evaluating the moments one by one, implementations of the subject matter can extract discriminative features to distinguish different moments. In this way, it is more convenient to extract the moment that best matches the query.

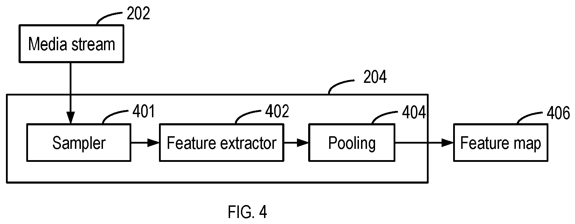

Fig. 4 illustrates a schematic diagram of the feature map extractor 204 in accordance with some implementations of the subject matter. The feature map extractor 204 includes a sampler 401 segmenting the video V into small video clips, where each video clip *υᵢ* may include K frames. Then, a fixed-interval sampling may be performed on the video clips, for example, to selection at least a part of the K frames for sampling. In this way, the sampler 401 may obtain N video clips denoted as $V = {\left\{{v}_{i}\right\}}_{i = 0}^{N - 1}$.

The feature extractor 402 may extract features of each video clip and output a representation of the video clip ${f}^{V} ∈ {ℝ}^{{d}^{V}}$, where *d^{V}* denotes a feature dimension. For example, the feature extractor 404 may be implemented via a Convolutional Neural Network (CNN). In some implementations, a fully-connected layer having *d^{V}* output channels may be disposed after the convolutional neural network to output a feature vector of the feature dimension *d^{V}.*

N video clips may serve as the basic elements for constructing candidate moments. For example, a feature map of the candidate moments may be constructed based on the features of the video clips obtained via the feature extractor 402. For example, a pooling layer 404 may extract features of respective moments from the features of the N video clips, to obtain the 2D temporal feature map 406 as shown in Figs. 3A and 3B. For example, the pooling layer 404 may be a max pooling layer. As a parameter-free approach, the max pooling can lower the computation amount of the system. For example, max pooling may be performed on the features of all clips corresponding to each moment to calculate its feature ${f}_{a , b}^{M} = maxpool \left({f}_{a}^{V},{f}_{a + 1}^{V},…,{f}_{b}^{V}\right)$, where a and b represent indices of starting clip and end clip while satisfying 0 ≤ a ≤ *b* ≤ *N* - 1 . Taking the moment denoted by the coordinates (0, 1) in Fig. 3B as an example, the max pooling is performed on the first and second clips. In this way, more adjacent clips are pooled for a longer moment while fewer clips are pooled for a shorter moment.

It should be appreciated that the pooling layer 404 may be replaced by any other suitable way. For example, a convolutional neural network may replace the pooling layer 404. As an example, a stacked multi-layer convolution neural network may replace the pooling layer 404.

The feature map extractor 204 may construct all moments into 2D temporal feature map 206, denoted as ${F}^{M} ∈ {ℝ}^{N \times N \times {d}^{V}}$. As described above, the 2D temporal feature map F*^{M}* is composed of three dimensions, where two dimensions N represent indices of starting and end clips respectively while a third dimension *d^{V}* indicates the feature dimension. The feature of the moment starting from clips *υₐ* to *υ_{b}* is **F***^{M}*[*a, b, :*], where ${F}^{M} \left[a,b,:\right] = {f}_{a , b}^{M}$.

Indices of starting clip and end clip of the moment a and b should satisfy *a* ≤ *b*. Therefore, in the 2D temporal feature map, all moments within an area where *a* > *b* (i.e., lower triangular part of the feature map) are invalid. For example, the features in this area may be padded with zero.

In some implementations, all possible adjacent video clips may act as candidate clips. However, this processing mechanism may result in a great computation overhead for subsequent processing. In some implementations, the computation overhead may be decreased by a sparse sampling solution, in which redundant moments with large overlaps may be deleted from the candidate moments. Specifically, short moments may be sampled densely and the sample interval increases as the moment length increases.

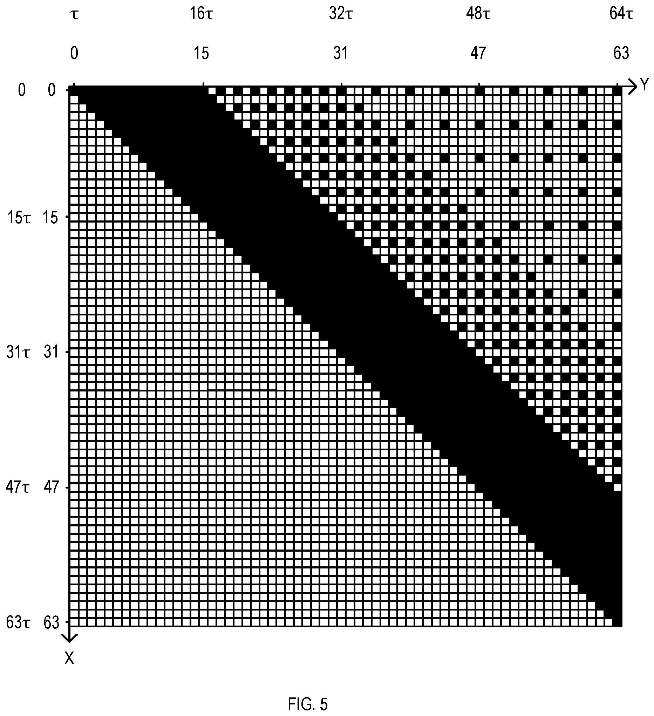

Fig. 5 illustrates an example of such a sparse sampling solution. Fig. 5 shows a 2D temporal feature map similar to Fig. 3B, where each small square indicates a moment. Starting time and its index are illustrated on X-axis while end time and its index are illustrated on Y-axis. In Fig. 5, the lower triangular part is an invalid portion and the upper triangular part is a valid portion. The upper triangular part of Fig. 5 includes two patterns, i.e., black-padded square and white-padded square, the black-padded square being sampled as candidate moments. It can be seen from Fig. 5 that moments with a small difference between X and Y indices have a low overlapping rate and thus can all act as the candidate moments. As the difference between X and Y indices increases, the overlapping rate between the moments increases and the candidate moments can be selected to be more sparse accordingly.

This coefficient sampling solution may be represented in mathematical language. For example, when the number of sampled clips is small (such as *N* ≤ 16), all possible moments may be listed as candidate moments as shown in Fig. 3B. When N becomes large (such as *N* > 16), moments starting from clips *υₐ* to *υ_{b}* may be selected as candidate moments when satisfying the following condition:
$G \left(a, b\right) ⇐ \left(a mod s=0\right) & \left(\left(b-s′\right) mod s=0\right) ,$ (1)
where a and b denote clip index, mod denotes modulus, & denote AND and s and s' are defined as follows:
$\begin{matrix}s = {2}^{k - 1} , \\ s ′ = \left\{\begin{matrix}0 & k = 1 \\ {2}^{k + 2} - 1 & k ! = 1\end{matrix}\right.\end{matrix}$ (2)
where $k = \left⌈{log}_{2}\left(\frac{b - a + 1}{8}\right)\right⌉$ and $\left⌈⋅\right⌉$ denotes rounding up. If *G*(*a*, *b*) *=* 1, this moment is selected as the candidate moment; otherwise, it will not be selected. Such sampling strategy can largely reduce the number of candidate moments and further lower the computation overheads.

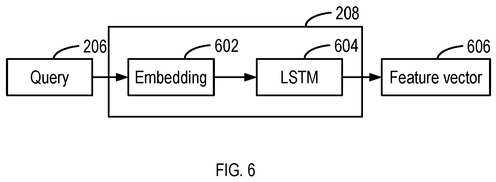

Fig. 6 illustrates a schematic diagram of the language encoder 208 in accordance with some implementations of the subject matter. As shown, the language encoder 208 includes an embedding layer 602 and a Long Short Term Memory (LSTM) network 604. For example, for each word *sᵢ* in the query 206 (e.g., input sentence S), the embedding layer 602 may generate an embedding vector representing the word
${w}_{i} ∈ {ℝ}^{{d}^{S}}$, where *d^{S}* denotes the vector length. The embedding layer 602 may output word embeddings ${\left\{{w}_{i}\right\}}_{i = 0}^{{l}^{S} - 1}$ to the LSTM network 604, which may include multi-layer bi-directional LSTM like three-layer Bi-LSTM. The LSTM network 604 may take its last hidden state as the feature representation of the input sentence S, i.e., feature vector 606 denoted as ${f}^{S} ∈ {ℝ}^{{d}^{S}}$. The feature vector 606 encodes the language structure of the query 206 to embody information of moment-of-interest of the query 206. It should be understood that the encoder 208 shown in Fig. 6 is provided only as an example and any other suitable encoder structure currently known or to be developed may also be used.

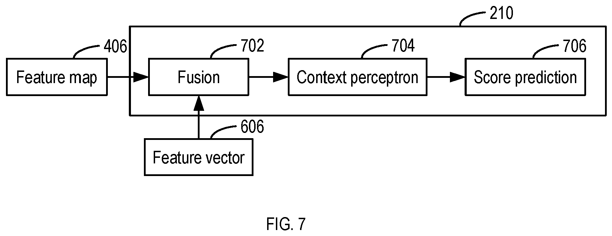

Fig. 7 illustrates a schematic diagram of the temporal adjacent network 210 in accordance with some implementations of the subject matter. As shown, a fuser 702 may fuse the 2D temporal feature map 406 or F*^{M}* with the feature vector 606 or f*^{S}*. In one implementation, the fuser 702 may include a fully-connected layer which projects the two features into a unified sub-space. The fuser 702 may also include a Hadamard product and l₂ normalization for fusing the projected features. The fused feature map may also have a dimension of *N* × *N* × *d^{V}.* The fuser 702 may be represented in the mathematical form as:
$F = {\left‖\left({w}^{S}⋅{f}^{S}⋅{1}^{T}\right)⊙\left({W}^{M}⋅{F}^{M}\right)\right‖}_{2}$ (3)
where w*^{S}* and w*^{M}* denote learning parameters of the fully-connected layer, 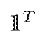 denotes transposition of an all-ones vector, ⊙ denotes Hadamard product and ∥·∥₂ denotes l₂ normalization.

It should be appreciated that the fuser 702 may be implemented using other neural network architecture, for example, by an attention mechanism.

A context perceptron 704 may construct the temporal adjacent network on the fused 2D temporal feature map **F**. For example, the context perceptron 704 may include a convolutional neural network with L convolutional layers and a kernel size of k. The output of the context perceptron 704 may keep the same shape as the input fusion feature map, i.e., N × N. The context perceptron 704 enables a model to gradually perceive more context of the adjacent candidate moments while learning differences between the candidate moments. In addition, receptive field of the network is huge, so it can observe the contents of the entire video and sentence, resulting in learning the temporal dependency.

In some implementations, the convolutional neural network may include a dilated convolution. The sparse sampling as described above may be implemented by adaptively modifying or adapting the stride parameter of the dilated convolution. For example, a 3×3 convolution kernel, if the stride is set to 1, is equivalent to a convolution kernel of 5×5 with 16 dilations or holes where only 9 points are sampled.

A large stride is used at a low sampling rate and a small stride is used at a high sampling rate. As described above, the sampling rate is related to the moment length; a low sampling rate may be adopted for a long moment, while a high sampling rate may be adopted for a short moment. Therefore, a large stride may be adapted for a long moment and a small stride may be adopted for a short moment.

Zero-padded areas are present in the 2D fusion feature map. In some implementations, when convolution is performed on these areas, only the values in the valid area are calculated. In other words, the zero-padded features are not considered in the calculation to lower the computation overheads.

A score predictor 706 may predict, based on the feature map output by the context perceptron, matching scores between the candidate moments and the natural language query. For example, the score predictor 706 may include a fully-connected layer and an activation function layer. For example, sigmoid function may be used as the activation function.

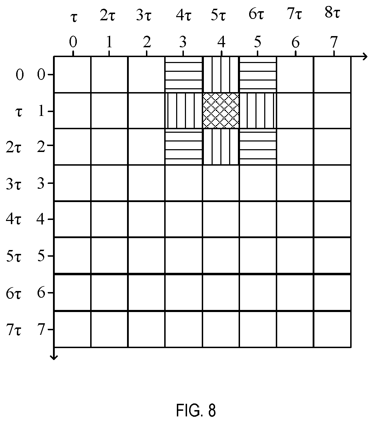

Fig. 8 illustrates a schematic diagram of the 2D temporal map in accordance with some implementations of the subject matter. The 2D temporal map corresponds to the 2D temporal feature map in Figs. 3A and 3B. The 2D temporal map is also referred to as 2D score plot, where each square represents the score of the corresponding candidate moment. For example, coordinates (1, 4) shows the highest score, which indicates that the moment starting from time □ to time 5□ is the best match for the query.

For example, according to the candidate indicator G(a, b) in Equation (1), all valid scores on the 2D temporal map may be collected, denoted as $P = {\left\{{p}_{i}\right\}}_{i = 1}^{C}$, where C is the total number of candidate moments. Each value *pᵢ* on the 2D temporal map represents the matching score between a candidate moment and the queried sentence. The maximum value indicates the best matching moment.

During training, the computation cost or overhead may be reduced by using scaled Intersection Over Union (IoU) values as the supervision signal. Specifically, for each candidate moment, its IoU score *oᵢ* with the ground truth moment may be calculated. The IoU score *oᵢ* is then scaled by two thresholds *tₘᵢₙ* and *tₘₐₓ* as
${y}_{i} = \left\{\begin{matrix}0 & {o}_{i} \leq {t}_{min} , \\ \frac{{o}_{i} - {t}_{min}}{{t}_{max} - {t}_{min}} & {t}_{min} < {o}_{i} < {t}_{max} , \\ 1 & {o}_{i} \leq {t}_{max} ,\end{matrix}\right.$ (4)
and *yᵢ* servers as the supervision label. In some implementations, the training may be performed using a binary cross entropy loss function shown in Equation (5).$Loss = \frac{1}{C} {\sum }_{i = 1}^{C} {y}_{i} log {p}_{i} + \left(1-{y}_{i}\right) log \left(1-{p}_{i}\right)$ (5)
where *pᵢ* denotes the output score of a moment.

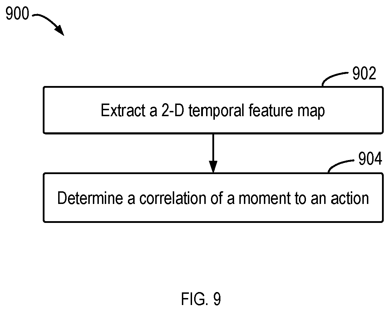

Fig. 9 illustrates a flowchart of a method 900 in accordance with some implementations of the subject matter. The method 900 may be combined with the embodiments as shown in Figs. 1-8. For example, the method 900 may be implemented in the NN module 122 as shown in Fig. 1 and may also be implemented by the neural network 200 of Fig. 2.

At block 902, a two-dimensional temporal feature map representing a plurality of moments within a media stream is extracted from the media stream, wherein the two-dimensional temporal feature map comprises a first dimension representing a start of a respective one of the plurality of moments and a second dimension representing an end of a respective one of the plurality of moments. For example, the two-dimensional temporal feature map may be the ones as shown in Figs. 3A, 3B, and 5. For example, the first dimension may be the start of a candidate moment and the second dimension may be the end of a candidate moment. For example, the media stream may include untrimmed media stream, such as video and/or audio.

In some implementations, extracting the two-dimensional temporal feature map includes: segmenting the media stream into a plurality of clips; extracting features of respective ones of the plurality of clips to obtain a feature map of the media stream; and extracting, from features of one or more clips corresponding to a moment of the plurality of moments in the feature map of the media stream, features of this moment as a part of the two-dimensional temporal feature map.

In some implementations, extracting features of a particular candidate moment includes: extracting by pooling, from features of one or more clips corresponding to the particular candidate moment, features of the particular candidate moment. For example, the pooling may be max pooling.

At block 904, a correlation between the plurality of moments and an action in the media stream is determined based on the two-dimensional temporal feature map. The correlation may be embodied in the form of score, probability or the like. In moment localization with natural language, action may be specified by the query. For temporal action proposal and temporal action detection, the action may be any possible action(s) in the media stream.

In some implementations, not covered by the invention, determining the correlation comprises: sampling the plurality of moments at respective sample rates to determine a plurality of candidate moments, wherein the sample rates are adaptively adjusted based on lengths of respective ones of the plurality of moments; and determining a correlation between the plurality of candidate moments and the action in the media stream.

In some, not covered by the invention, the sample rates are configured to decrease as the lengths of the respective moments increase.

Determining the correlation comprises: applying a convolutional layer to the two-dimensional temporal feature map to obtain a further feature map having a same dimension as the two-dimensional temporal feature map; and determining, based on the further feature map, scores of correlation between the plurality of moments and the action in the media stream.

In some implementations, the convolutional layer comprises a dilated convolution and strides of the dilated convolution are configured to increase as lengths of the respective moments increase.

In some implementations, not covered by the invention, determining the correlation comprises: in response to receiving a query for a particular action in the media stream, extracting a feature vector of the query; and determining the correlation based on the feature vector of the query and the two-dimensional temporal feature map.

In some implementations, not covered by the invention, determining the correlation comprises: fusing the feature vector of the query and the two-dimensional temporal feature map to generate a further two-dimensional temporal feature map having a same dimension as the two-dimensional temporal feature map; and determining, based on the further two-dimensional temporal feature map, the correlation between the plurality of moments and the particular action.

In some implementations, not covered by the invention, fusing the feature vector of the query and the two-dimensional temporal feature map comprises: generating the further two-dimensional temporal feature map by applying a Hadamard product to the feature vector of the query and the two-dimensional temporal feature map.

Some example implementations of the present disclosure are listed below.

In a first aspect, there is provided a computer-implemented method. The method comprises: extracting, from a media stream, a two-dimensional temporal feature map representing a plurality of moments within the media stream, wherein the two-dimensional temporal feature map comprises a first dimension representing a start of a respective one of the plurality of moments and a second dimension representing an end of a respective one of the plurality of moments; and determining, based on the two-dimensional temporal feature map, a correlation between the plurality of moments and an action in the media stream.

In some implementations, extracting the two-dimensional temporal feature map comprises: segmenting the media stream into a plurality of clips; extracting features of respective ones of the plurality of clips to obtain a feature map of the media stream; and extracting, from features of one or more clips corresponding to a moment of the plurality of moments in the feature map of the media stream, features of this moment as a part of the two-dimensional temporal feature map.

In some implementations, not covered by the invention, determining the correlation comprises: sampling the plurality of moments at respective sample rates to determine a plurality of candidate moments, wherein the sample rates are adaptively adjusted based on lengths of respective ones of the plurality of moments; and determining a correlation between the plurality of candidate moments and the action in the media stream.

In some implementations, not covered by the invention, the sample rates are configured to decrease as the lengths of the respective moments increase.

Determining the correlation comprises: applying a convolutional layer to the two-dimensional temporal feature map to obtain a further feature map having a same dimension as the two-dimensional temporal feature map; and determining, based on the further feature map, scores of correlation between the plurality of moments and the action in the media stream.

In some implementations, the convolutional layer comprises a dilated convolution and strides of the dilated convolution are configured to increase as lengths of the respective moments increase.

In some implementations, not covered by the invention, determining the correlation comprises: in response to receiving a query for a particular action in the media stream, extracting a feature vector of the query; and determining the correlation based on the feature vector of the query and the two-dimensional temporal feature map.

In some implementations, not covered by the invention, determining the correlation comprises: fusing the feature vector of the query and the two-dimensional temporal feature map to generate a further two-dimensional temporal feature map having a same dimension as the two-dimensional temporal feature map; and determining, based on the further two-dimensional temporal feature map, the correlation between the plurality of moments and the particular action.

In some implementations, not covered by the invention, fusing the feature vector of the query and the two-dimensional temporal feature map comprises: generating the further two-dimensional temporal feature map by applying a Hadamard product to the feature vector of the query and the two-dimensional temporal feature map.

The first dimension is the start of the respective one of the plurality of moments and the second dimension is the end of the respective one of the plurality of moments.

In some implementations, the media stream comprises an untrimmed media stream.

In some implementations, extracting features of a particular candidate moment comprises: extracting by pooling, from features of one or more clips corresponding to the particular candidate moment, features of the particular candidate moment.

In some implementations, the pooling may be max pooling.

In some implementations, the media stream comprises at least one of video stream and audio stream.

In a second aspect, there is provided a device comprising: a processing unit; and a memory coupled to the processing unit and having instructions stored thereon, the instructions, when executed by the processing unit, causing the device to perform acts comprising: extracting, from a media stream, a two-dimensional temporal feature map representing a plurality of moments within the media stream, wherein the two-dimensional temporal feature map comprises a first dimension representing a start of a respective one of the plurality of moments and a second dimension representing an end of a respective one of the plurality of moments; and determining, based on the two-dimensional temporal feature map, a correlation between the plurality of moments and an action in the media stream.

In some implementations, extracting the two-dimensional temporal feature map comprises: segmenting the media stream into a plurality of clips; extracting features of respective ones of the plurality of clips to obtain a feature map of the media stream; and extracting, from features of one or more clips corresponding to a moment of the plurality of moments in the feature map of the media stream, features of this moment as a part of the two-dimensional temporal feature map.

In some implementations, not covered by the invention, determining the correlation comprises: sampling the plurality of moments at respective sample rates to determine a plurality of candidate moments, wherein the sample rates are adaptively adjusted based on lengths of respective ones of the plurality of moments; and determining a correlation between the plurality of candidate moments and the action in the media stream.

In some implementations, not covered by the invention, the sample rates are configured to decrease as the lengths of the respective moments increase.

Determining the correlation comprises: applying a convolutional layer to the two-dimensional temporal feature map to obtain a further feature map having a same dimension as the two-dimensional temporal feature map; and determining, based on the further feature map, scores of correlation between the plurality of moments and the action in the media stream.

In some implementations, the convolutional layer comprises a dilated convolution and strides of the dilated convolution are configured to increase as lengths of the respective moments increase.

In some implementations, not covered by the invention, determining the correlation comprises: in response to receiving a query for a particular action in the media stream, extracting a feature vector of the query; and determining the correlation based on the feature vector of the query and the two-dimensional temporal feature map.

In some implementations, not covered by the invention, determining the correlation comprises: fusing the feature vector of the query and the two-dimensional temporal feature map to generate a further two-dimensional temporal feature map having a same dimension as the two-dimensional temporal feature map; and determining, based on the further two-dimensional temporal feature map, the correlation between the plurality of moments and the particular action.

In some implementations, not covered by the invention, fusing the feature vector of the query and the two-dimensional temporal feature map comprises: generating the further two-dimensional temporal feature map by applying a Hadamard product to the feature vector of the query and the two-dimensional temporal feature map.

The first dimension is the start of the respective one of the plurality of moments and the second dimension is the end of the respective one of the plurality of moments.

In some implementations, the media stream comprises an untrimmed media stream.

In some implementations, extracting features of a particular candidate moment comprises: extracting by pooling, from features of one or more clips corresponding to the particular candidate moment, features of the particular candidate moment.

In some implementations, the pooling may be max pooling.

In some implementations, the media stream comprises at least one of video stream and audio stream.

In a third aspect, there is provided a computer program product being tangibly stored in a non-transitory computer storage medium and including computer-executable instructions which, when executed by a device, cause the device to perform the method of the first aspect.

In a fourth aspect, there is provided a computer-readable storage medium having computer-executable instructions stored thereon, the computer-executable instructions, when executed by a device, cause the device to perform the method of the first aspect.

The functionality described herein can be performed, at least in part, by one or more hardware logic components. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

Program code for carrying out methods of the subject matter may be written in any combination of one or more programming languages. These program codes may be provided to a processor or controller of a general purpose computer, special purpose computer, or other programmable data processing apparatus, such that the program codes, when executed by the processor or controller, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of this disclosure, a machine readable medium may be any tangible medium that may contain, or store a program for use by or in connection with an instruction execution system, apparatus, or device. The machine readable medium may be a machine readable signal medium or a machine readable storage medium. A machine readable medium may include but not limited to an electronic, magnetic, optical, electromagnetic, infrared, or semiconductor system, apparatus, or device, or any suitable combination of the foregoing. More specific examples of the machine readable storage medium would include an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, although operations are depicted in a particular order, it should be understood that the operations are required to be executed in the shown particular order or in a sequential order, or all shown operations are required to be executed to achieve the expected results. In certain circumstances, multitasking and parallel processing may be advantageous. Likewise, while several specific implementation details are contained in the above discussions, these should not be construed as limitations on the scope of the subject matter described herein. Certain features that are described in the context of separate implementations may also be implemented in combination in a single implementation. Conversely, various features that are described in the context of a single implementation may also be implemented in multiple implementations separately or in any suitable sub-combination.

Although the subject matter has been described in language specific to structural features and/or methodological acts, it is to be understood that the subject matter specified in the appended claims is not necessarily limited to the specific features or acts described above. Rather, the specific features and acts described above are disclosed as example forms of implementing the claims.

## Claims

1. A computer-implemented method (900) for moments localization in a media stream, the method comprising:
extracting (902), from the media stream, a temporal feature map representing a plurality of moments within the media stream, wherein the temporal feature map is composed of three dimensions, and comprises a first dimension representing a start of a respective one of the plurality of moments and a second dimension representing an end of a respective one of the plurality of moments, and a third dimension indicating a feature dimension of the plurality of moments; and
determining (904), based on the temporal feature map, a correlation between the plurality of moments and an action in the media stream by
applying a convolutional layer to the temporal feature map to obtain a further feature map having a same dimension as the temporal feature map; and
determining, based on the further feature map, scores of correlation between the plurality of moments and the action in the media stream.

2. The method (900) of claim 1, wherein extracting (902) the temporal feature map comprises:
segmenting the media stream into a plurality of clips;
extracting features of respective ones of the plurality of clips to obtain a feature map of the media stream; and
extracting, from features of one or more clips corresponding to a moment of the plurality of moments in the feature map of the media stream, features of this moment as a part of the temporal feature map.

3. The method (900) of claim 1, wherein the convolutional layer comprises a dilated convolution and strides of the dilated convolution are configured to increase as lengths of the respective moments increase.

4. The method (900) of claim 1, wherein the media stream comprises an untrimmed media stream.

5. A device (100) for moments localization in a media stream, the device comprising:
a processing unit (110); and
a memory (120) coupled to the processing unit (110) and having instructions stored thereon, the instructions, when executed by the processing unit (110), causing the device (100) to perform acts comprising:
extracting (902), from the media stream, a temporal feature map is composed of three dimensions, and representing a plurality of moments within the media stream, wherein the temporal feature map comprises a first dimension representing a start of a respective one of the plurality of moments and a second dimension representing an end of a respective one of the plurality of moments; and
determining (904), based on the temporal feature map, a correlation between the plurality of moments and an action in the media stream by
applying a convolutional layer to the temporal feature map to obtain a further feature map having a same dimension as the temporal feature map; and
determining, based on the further feature map, scores of correlation between the plurality of moments and the action in the media stream.

6. The device (100) of claim 5, wherein extracting (902) the temporal feature map comprises:
segmenting the media stream into a plurality of clips;
extracting features of respective ones of the plurality of clips to obtain a feature map of the media stream; and
extracting, from features of one or more clips corresponding to a moment of the plurality of moments in the feature map of the media stream, features of this moment as a part of the temporal feature map.

7. A computer program product stored in a computer storage medium (120) and comprising computer-executable instructions which, when executed by a device (100), cause the device (100) to perform the method of any of claims 1-4.

## Patentansprüche

1. Computerimplementiertes Verfahren (900) zur Momentlokalisierung in einem Medienstrom, wobei das Verfahren Folgendes umfasst:
Extrahieren (902), aus dem Medienstrom, einer zeitlichen Merkmalskarte, die eine Vielzahl von Momenten innerhalb des Medienstroms darstellt, wobei die zeitliche Merkmalskarte aus drei Dimensionen besteht und eine erste Dimension, die einen Beginn eines jeweiligen einen der Vielzahl von Momenten darstellt, und eine zweite Dimension, die ein Ende eines jeweiligen einen der Vielzahl von Momenten darstellt, und eine dritte Dimension, die eine Merkmalsdimension der Vielzahl von Momenten angibt, umfasst; und
Bestimmen (904), basierend auf der zeitlichen Merkmalskarte, einer Korrelation zwischen der Vielzahl von Momenten und einer Aktion in dem Medienstrom durch
Anwenden einer Faltungsschicht auf die zeitliche Merkmalskarte, um eine weitere Merkmalskarte zu erhalten, die eine selbe Dimension wie die zeitliche Merkmalskarte aufweist; und
Bestimmen, basierend auf der weiteren Merkmalskarte, von Werten der Korrelation zwischen der Vielzahl von Momenten und der Aktion in dem Medienstrom.

2. Verfahren (900) nach Anspruch 1, wobei das Extrahieren (902) der zeitlichen Merkmalskarte Folgendes umfasst:
Segmentieren des Medienstroms in eine Vielzahl von Clips;
Extrahieren von Merkmalen jeweiliger einer der Vielzahl von Clips, um eine Merkmalskarte des Medienstroms zu erhalten; und
Extrahieren, aus Merkmalen von einem oder mehreren Clips, die einem Moment der Vielzahl von Momenten in der Merkmalskarte des Medienstroms entsprechen, von Merkmalen dieses Moments, als Teil der zeitlichen Merkmalskarte.

3. Verfahren (900) nach Anspruch 1, wobei die Faltungsschicht eine dilatierte Faltung umfasst und Schritte der dilatierten Faltung so konfiguriert sind, dass sie mit zunehmenden Längen der jeweiligen Momente zunehmen.

4. Verfahren (900) nach Anspruch 1, wobei der Medienstrom einen ungekürzten Medienstrom umfasst.

5. Vorrichtung (100) zur Momentlokalisierung in einem Medienstrom, wobei die Vorrichtung Folgendes umfasst:
eine Verarbeitungseinheit (110); und
einen Speicher (120), der an die Verarbeitungseinheit (110) gekoppelt ist und darauf gespeicherte Anweisungen aufweist, wobei die Anweisungen bei Ausführung durch die Verarbeitungseinheit (110) die Vorrichtung (100) dazu veranlassen, Aktionen durchzuführen, umfassend:
Extrahieren (902), aus dem Medienstrom, einer zeitlichen Merkmalskarte, aus drei Dimensionen besteht und eine Vielzahl von Momenten innerhalb des Medienstroms darstellt, wobei die zeitliche Merkmalskarte eine erste Dimension, die einen Beginn eines jeweiligen einen der Vielzahl von Momenten darstellt, und eine zweite Dimension, die ein Ende eines jeweiligen einen der Vielzahl von Momenten darstellt, umfasst; und
Bestimmen (904), basierend auf der zeitlichen Merkmalskarte, einer Korrelation zwischen der Vielzahl von Momenten und einer Aktion in dem Medienstrom durch
Anwenden einer Faltungsschicht auf die zeitliche Merkmalskarte, um eine weitere Merkmalskarte zu erhalten, die eine selbe Dimension wie die zeitliche Merkmalskarte aufweist; und
Bestimmen, basierend auf der weiteren Merkmalskarte, von Werten der Korrelation zwischen der Vielzahl von Momenten und der Aktion in dem Medienstrom.

6. Vorrichtung (100) nach Anspruch 5, wobei das Extrahieren (902) der zeitlichen Merkmalskarte Folgendes umfasst:
Segmentieren des Medienstroms in eine Vielzahl von Clips;
Extrahieren von Merkmalen jeweiliger einer der Vielzahl von Clips, um eine Merkmalskarte des Medienstroms zu erhalten; und
Extrahieren, aus Merkmalen von einem oder mehreren Clips, die einem Moment der Vielzahl von Momenten in der Merkmalskarte des Medienstroms entsprechen, von Merkmalen dieses Moments, als Teil der zeitlichen Merkmalskarte.

7. Computerprogrammprodukt, das in einem Computerspeichermedium (120) gespeichert ist und computerausführbare Anweisungen umfasst, die bei Ausführung durch eine Vorrichtung (100) die Vorrichtung (100) dazu veranlassen, das Verfahren nach einem der Ansprüche 1-4 durchzuführen.

## Revendications

1. Procédé mis en œuvre par ordinateur (900) pour la localisation d'instants dans un flux multimédia, le procédé comprenant :
l'extraction (902), à partir du flux multimédia, d'une carte de caractéristiques temporelles représentant une pluralité d'instants au sein du flux multimédia, dans lequel la carte de caractéristiques temporelles est composée de trois dimensions et comprend une première dimension représentant un début d'un instant respectif de la pluralité d'instants et une deuxième dimension représentant une fin d'un instant respectif de la pluralité d'instants, et une troisième dimension indiquant une dimension caractéristique de la pluralité d'instants ; et
la détermination (904), sur la base d'une carte de caractéristiques temporelles, d'une correlation entre la pluralité d'instants et une action dans le flux multimédia en
appliquant une couche convolutionnelle à la carte de caractéristiques temporelles afin d'obtenir une autre carte de caractéristiques ayant les mêmes dimensions que la carte de caractéristiques temporelles ; et
la détermination, sur la base d'une autre carte de caractéristiques, des scores de corrélation entre la pluralité d'instants et l'action dans le flux multimédia.

2. Procédé (900) selon la revendication 1, dans lequel l'extraction (902) de la carte de caractéristiques temporelles comprend :
la segmentation du flux multimédia en une pluralité d'extraits ;
l'extraction de caractéristiques de chacun des différents extraits de la pluralité d'extraits afin d'obtenir une carte de caractéristiques du flux multimédia ; et
l'extraction, à partir des caractéristiques d'un ou plusieurs extraits correspondant à un instant parmi la pluralité d'instants figurant dans la carte des caractéristiques du flux multimédia, des caractéristiques de cet instant en tant que partie de la carte des caractéristiques temporelles.

3. Procédé (900) selon la revendication 1, dans lequel la couche convolutionnelle comprend une convolution dilatée et des pas de la convolution dilatée sont configurés pour augmenter à mesure que les longueurs des instants respectifs augmentent.

4. Procédé (900) selon la revendication 1, dans lequel le flux multimédia comprend un flux multimédia non découpé.

5. Dispositif (100) de localisation d'instants dans un flux multimédia, le dispositif comprenant :
une unité de traitement (110) ; et
une mémoire (120) couplée à l'unité de traitement (110) et sur laquelle sont stockées des instructions, les instructions, lorsqu'elles sont exécutées par l'unité de traitement (110), amenant le dispositif (100) à effectuer des actions comprenant :
l'extraction (902), à partir du flux multimédia, d'une carte de caractéristiques temporelles composée de trois dimensions et représentant une pluralité d'instants au sein du flux multimédia, dans lequel la carte de caractéristiques temporelles comprend une première dimension représentant le début d'un instant respectif de la pluralité d'instants et une deuxième dimension représentant une fin d'un instant respectif parmi la pluralité d'instants ; et
la détermination (904), sur la base d'une carte de caractéristiques temporelles, d'une correlation entre la pluralité d'instants et une action dans le flux multimédia en
appliquant une couche convolutionnelle à la carte de caractéristiques temporelles afin d'obtenir une autre carte de caractéristiques ayant les mêmes dimensions que la carte de caractéristiques temporelles ; et
la détermination, sur la base d'une autre carte de caractéristiques, des scores de corrélation entre la pluralité d'instants et l'action dans le flux multimédia.

6. Dispositif (100) selon la revendication 5, dans lequel l'extraction (902) de la carte de caractéristiques temporelles comprend :
la segmentation du flux multimédia en une pluralité d'extraits ;
l'extraction de caractéristiques de chacun des différents extraits de la pluralité d'extraits afin d'obtenir une carte de caractéristiques du flux multimédia ; et
l'extraction, à partir des caractéristiques d'un ou plusieurs extraits correspondant à un instant parmi la pluralité d'instants figurant dans la carte des caractéristiques du flux multimédia, les caractéristiques de cet instant en tant que partie de la carte des caractéristiques temporelles.

7. Produit-programme informatique stocké sur un support de stockage informatique (120) et comprenant des instructions exécutables par ordinateur qui, lorsqu'elles sont exécutées par un dispositif (100), amènent le dispositif (100) à exécuter le procédé selon l'une quelconque des revendications 1 à 4.
